# FASCICULE DE BREVET EUROPEEN

(11) **EP 2 644 938 B1**
(45) Date de publication et mention de la délivrance du brevet: **03.09.2014**
(21) Numéro de dépôt: 13360002.3
(22) Date de dépôt: 25.02.2013
(51) Int. Cl.: F16G 1/28, F16G 3/00, F16G 3/02

(54) **Outillage de jonctionnement des extrémités dentées d'un segment de bande par une jonction mécanique**
Werkzeug zum Verbinden von gezackten Endstücken eines Bandsegments für eine mechanische Verbindung
Tool for joining the toothed ends of a strip element by a mechanical joint

(30) Priorité: 29.03.2012 FR 1252839
(43) Date de publication de la demande: 02.10.2013
(73) Titulaire: Tanals Société par actions simplifiées (SAS), 68290 Masevaux (FR)
(72) Inventeur: Frey, Pierre-Régis, 68460 Lutterbach (FR)
(74) Mandataire: Koelbel, Caroline

(56) Documents cités:
- EP-A2- 1 967 758
- EP-A2- 2 108 860
- WO-A2-2006/052629
- US-A- 3 744 095
- US-A- 5 092 823

## Description

### Domaine technique :

La présente invention concerne un outillage de jonctionnement des extrémités dentées d'un segment de bande pour former une courroie en forme de boucle fermée au moyen d'une jonction mécanique, lesdites extrémités étant pourvues de dentures complémentaires et ladite jonction comportant des tiges de verrouillage introduites transversalement à travers des orifices traversants ménagés dans lesdites dentures complémentaires des extrémités dudit segment de bande.

### Technique antérieure :

Ce type de jonction mécanique est bien connu dans le domaine des courroies de transmission et des bandes transporteuses pour tout type d'industrie. L'assemblage des extrémités dentées d'une courroie par une jonction mécanique permet d'ouvrir la courroie facilitant ainsi son montage et son démontage sur une machine sans aucun démontage de ladite machine. A l'inverse, une courroie standard qui est fermée nécessite de démonter une partie de la machine pour pouvoir la changer.

Un exemple de ce type de jonction mécanique est décrit dans la publication FR 2 959 695 du même demandeur. Pour monter une courroie équipée d'une jonction mécanique telle que décrite dans cette publication, il faut notamment :
- retirer la courroie précédente,
- passer la nouvelle courroie à jonction mécanique autour des poulies,
- détendre le tendeur prévu sur la machine,
- aligner les deux extrémités de la courroie dans le même plan,
- emboiter les dentures complémentaires,
- visser une à une les tiges de verrouillage pour bloquer la jonction mécanique, et
- retendre le tendeur.

L'opération de vissage des tiges de verrouillage est particulièrement fastidieuse notamment si ces tiges ont un faible diamètre, les plus petites tiges pouvant être constituées de vis M2 à tête fendues. Le moindre glissement de la visseuse endommage les têtes de vis et peut présenter un risque de blessure pour l'opérateur.

Si la machine n'est pas équipée de tendeur, il est impossible de monter une courroie équipée d'une telle jonction mécanique, ce qui limite ses possibilités d'application.

A titre d'exemple, dans le cas où ces courroies sont directement installées sur des lignes de production où la minute d'arrêt coûte très chère, monter une courroie pourvue d'une jonction mécanique nécessite un temps d'arrêt d'environ 20mn au lieu de 2h pour une courroie fermée.

La publication US 3,744,095 propose de bloquer en position, entre deux plaques de serrage, les deux extrémités d'un segment de bande emboîtées par leur denture pour pouvoir introduire les tiges de verrouillage, la plaque de serrage inférieure comportant des crans complémentaires à ceux du segment de bande et la plaque de serrage supérieure étant plane.

Toutefois, aucune solution mécanique complète n'existe à ce jour pour faciliter le montage de ce type de jonction, sécuriser l'opérateur et réduire encore le temps d'arrêt machine.

### Exposé de l'invention :

La présente invention vise à apporter une solution aux problèmes évoqués ci-dessus en proposant un outillage spécifique permettant de jonctionner les extrémités dentées d'une bande souple au moyen d'une jonction mécanique, de façon fiable et particulièrement rapide de manière à réduire à quelques minutes le temps d'arrêt machine, cet outillage étant transportable, facile à mettre en oeuvre et sécurisé pour l'opérateur.

Dans ce but, l'invention concerne un outillage de jonctionnement du genre indiqué en préambule, **caractérisé en ce** qu'il comporte un bâti pourvu d'un logement de centrage, ouvert, traversant et rectiligne le long d'un axe longitudinal, agencé pour recevoir les extrémités du segment de bande positionnées en regard l'une de l'autre, leurs dentures complémentaires étant emboîtées l'une dans l'autre, d'un magasin communicant avec ledit logement de centrage et pourvu d'alésages traversants agencés pour recevoir lesdites tiges de verrouillage, lesdits alésages étant parallèles entre eux et perpendiculaires à l'axe longitudinal dudit logement de centrage, et de moyens de poussée agencés pour déplacer lesdites tiges de verrouillage en les introduisant dans les orifices traversants de ladite jonction mécanique.

Le logement de centrage peut être fermé par une plaque de fermeture agencée pour maintenir les extrémités emboîtées dudit segment de bande pendant le jonctionnement.

Dans une première variante de réalisation, les moyens de poussée peuvent comporter des vis de poussée, chaque vis de poussée étant introduite dans un alésage traversant dudit magasin à l'opposé dudit logement de centrage et agencée pour être vissée individuellement de manière à introduire chaque tige de verrouillage individuellement dans un des orifices traversants de ladite jonction mécanique.

Dans une seconde variante de réalisation, les moyens de poussée peuvent comporter des tiges de poussée, chaque tige de poussée étant introduite dans un alésage traversant dudit magasin à l'opposé dudit logement de centrage, et un actionneur agencé pour déplacer lesdites tiges de poussée simultanément de manière à introduire lesdites tiges de verrouillage simultanément dans les orifices traversants de ladite jonction mécanique.

L'actionneur peut comporter une vis de force vissée dans un taraudage dudit bâti et dont l'extrémité est couplée aux tiges de poussée par un répartiteur de charge, ou un vérin porté par ledit bâti et dont la tige de vérin est couplée aux tiges de poussée par un répartiteur de charge.

Le magasin peut comporter des moyens de centrage disposés entre lesdits moyens de poussée et ledit logement de centrage et agencés pour centrer lesdites tiges de verrouillage. Ces moyens de centrage comportent avantageusement dans chaque alésage traversant du magasin un cône de centrage coaxial. Ils peuvent comporter deux demi-pièces pourvues chacune d'un demi-cône et superposées pour délimiter entre elles lesdits cônes de centrage, ces deux demi-pièces étant sollicitées l'une vers l'autre par un organe ressort.

L'outillage selon l'invention peut en outre comporter des moyens de mise en tension desdites extrémités dudit segment de bande portés par ledit bâti, tels que deux paires de mâchoires disposées de part et d'autre dudit logement de centrage, alignées sur l'axe longitudinal et dans le plan dudit logement, chaque paire de mâchoires étant agencées pour maintenir ledit segment de bande en amont desdites extrémités à jonctionner. De préférence, au moins une des paires de mâchoires est mobile et couplée audit bâti par au moins un organe d'entraînement agencé pour la déplacer en translation parallèlement audit axe longitudinal.

L'organe d'entraînement peut comporter une vis de serrage traversant un alésage lisse de ladite paire de mâchoires mobile et vissée dans un taraudage dudit bâti ou un vérin dont une partie est solidaire du bâti et l'autre partie est solidaire de ladite paire de mâchoires mobile.

Dans tous les cas, la paire de mâchoires mobile est de préférence guidée en translation par au moins une colonne de guidage parallèle audit axe longitudinal et solidaire dudit bâti ou de ladite paire de mâchoires mobile.

Chaque paire de mâchoires comporte avantageusement une mâchoire supérieure et une mâchoire inférieure articulées d'un côté et verrouillées de l'autre côté par un organe de fermeture. Les surfaces de réception dudit logement de centrage et desdites paires de mâchoires sont avantageusement complémentaires au segment de bande à jonctionner.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en perspective d'un outillage de jonctionnement selon une première variante de réalisation de l'invention,
- la figure 2 est une vue en perspective d'un outillage de jonctionnement selon une seconde variante de réalisation de l'invention,
- la figure 3 est une vue de dessus de l'outillage de la figure 2 montrant les dentures complémentaires des extrémités du segment de bande en cours d'emboîtement dans ledit outillage,
- la figure 4 est une vue en perspective de l'outillage de la figure 2 montrant les dentures complémentaires emboîtées dans ledit outillage,
- la figure 5 est une vue en coupe de l'outillage de la figure 2 selon le plan de coupe V-V de la figure 3,
- la figure 6 est une vue en coupe de l'outillage de la figure 2 selon le plan de coupe VI-VI de la figure 5,
- la figure 7 est une vue en coupe partielle et agrandie de l'outillage de la figure 2 selon le plan de coupe VII-VII de la figure 5 montrant la position de l'outillage avant l'étape de jonctionnement, et
- la figure 8 est une vue similaire à la figure 7 montrant la position de l'outillage après l'étape de jonctionnement.

### Illustrations de l'invention et différentes manières de la réaliser :

En référence aux figures, l'outillage de jonctionnement 10, 20 selon l'invention permet de jonctionner, sur des machines ou lignes de production, les extrémités 2, 3 d'un segment de bande 1 pour former une courroie en forme de boucle fermée au moyen d'une jonction mécanique. Pour ce faire, les extrémités 2, 3 comportent des dentures complémentaires 4, 5 et la jonction mécanique comporte des tiges de verrouillage 6 introduites transversalement à travers des orifices traversants 7 ménagés dans les dentures complémentaires 4, 5 des extrémités 2, 3 du segment de bande 1 pour bloquer la jonction. Le segment de bande 1 peut être réalisé en différents matériaux plus ou moins souples et plus ou moins élastiques, et peut comporter ou pas des structures de renfort sous forme de fils et/ou de nappes textiles et/ou métalliques, selon le type d'application de la courroie aussi bien en convoyage, qu'en transmission. De même, le segment de bande 1 peut être plat, structuré ou cranté, sur l'une ou sur ses deux faces. Dans les figures, le segment de bande 1 illustré comporte une face supérieure plane et une face inférieure crantée pour coopérer avec des poulies crantées complémentaires de manière à assurer un entraînement positif sans glissement de ladite courroie.

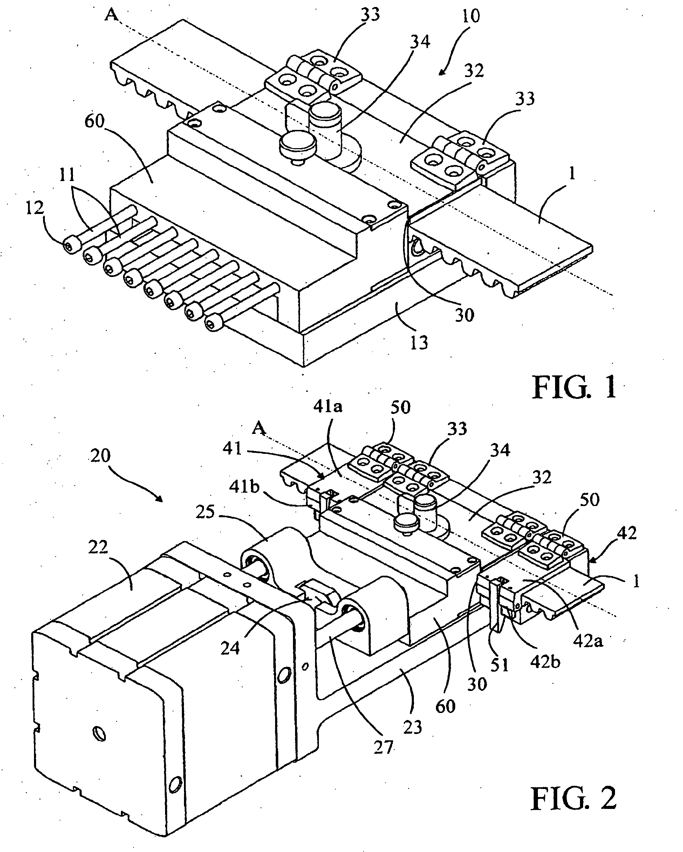

L'outillage 10, 20 selon l'invention peut se décliner en différentes variantes de réalisation selon les besoins du client dont deux variantes sont données à titre d'exemple. La figure 1 illustre une variante simplifiée de l'outillage 10 dans laquelle les vis de poussée 11 (décrites plus loin) sont actionnées individuellement et manuellement au moyen d'une clé ou d'une visseuse introduite dans les têtes de vis 12, et les extrémités du segment de bande 1 à jonctionner sont maintenues dans l'outillage 10 sans tension.

Alors que la figure 2 illustre une variante perfectionnée de l'outillage 20 dans laquelle les tiges de poussée 21 (décrites plus loin) sont actionnées simultanément et automatiquement au moyen d'un actionneur 22 alimenté par une énergie électrique, pneumatique ou hydraulique, selon les besoins du client, et les extrémités du segment de bande 1 sont maintenues dans l'outillage 20 sous tension.

Dans toutes les variantes de réalisation, l'outillage 10, 20 comporte un bâti 13, 23 sous la forme d'une plaque de support sur laquelle sont fixés les différents sous-ensemble constituant l'outillage 10, 20 de sorte à obtenir un outillage compact, monobloc, facile à transporter et ergonomique à utiliser, pour effectuer le jonctionnement d'un segment de bande directement sur une machine ou sur une ligne de production. Les parties et sous-ensembles communs aux deux outillages 10, 20 portent la même référence pour simplifier la description.

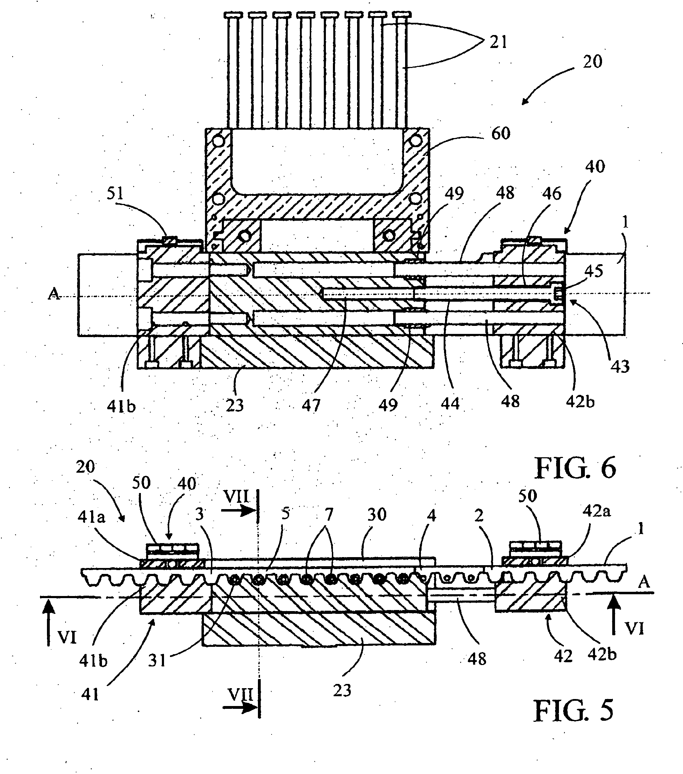

L'outillage 10, 20 comporte un logement de centrage 30, ouvert, traversant et rectiligne le long d'un axe longitudinal A, agencé pour recevoir, sans jeu ou avec un jeu faible, les extrémités 2, 3 du segment de bande 1 positionnées en regard l'une de l'autre, leurs dentures complémentaires 4, 5 étant emboîtées l'une dans l'autre. Ce logement de centrage 30 a par conséquent une section complémentaire à celle du segment de bande 1 et une surface de réception 31 complémentaire à la face correspondante du segment de bande 1, à savoir dans l'exemple illustré une surface crantée (cf. fig. 5). Ce logement de centrage 30 est fermé par une plaque de fermeture 32 articulée sur le bâti 13, 23 par deux charnières 33 et verrouillée en position fermée sur le bâti 13, 23 par un verrou 34. Elle permet de maintenir les extrémités 2, 3 emboîtées dudit segment de bande 1 pendant l'opération de jonctionnement.

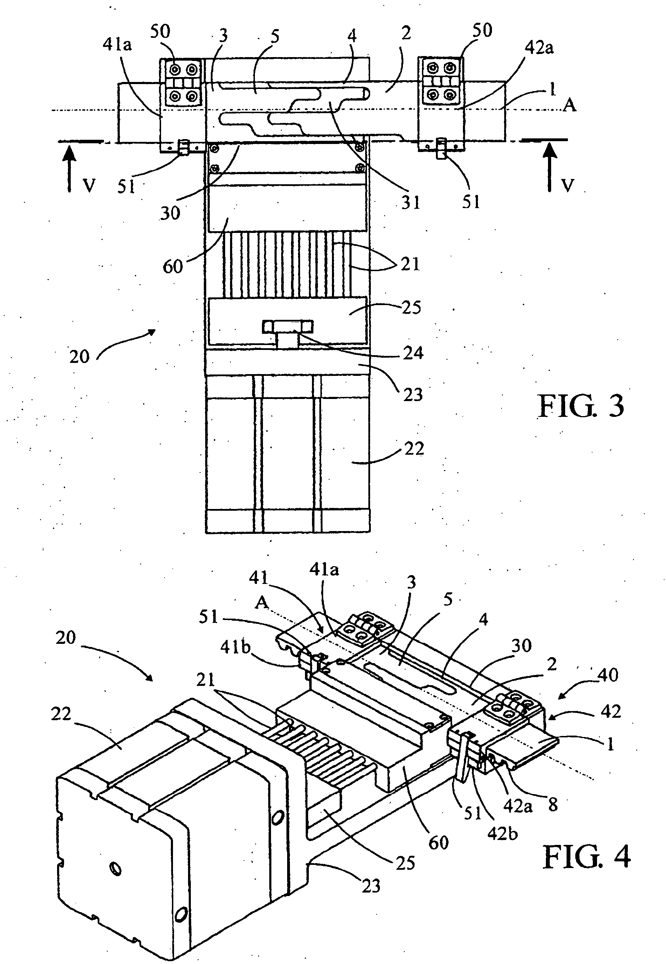

Dans certaines variantes de réalisation, l'outillage 10, 20 est complété par des moyens de mise en tension 40 des extrémités 2, 3 du segment de bande 1, pour exercer une force de traction sur les deux extrémités 2, 3 afin de les rapprocher pour emboîter leur denture complémentaire 4, 5 en contrant la force résistante d'un ou plusieurs tendeurs équipant la machine ou la ligne de production. Ces moyens de mise en tension 40 comportent deux paires de mâchoires 41, 42 disposées de part et d'autre du logement de centrage 30, alignées sur l'axe longitudinal A et dans le plan du logement. Chaque paire de mâchoires 41, 42 est agencée pour maintenir le segment de bande 1 en amont des extrémités 2, 3 à jonctionner. Au moins une des paires de mâchoires 42 est mobile et couplée au bâti 23 par au moins un organe d'entraînement 43 (cf. fig. 6) agencé pour la déplacer en translation parallèlement à l'axe longitudinal A entre une position écartée (cf. fig. 3, 5, 6) dans laquelle les dentures complémentaires 4, 5 ne sont pas emboîtées, et une position rapprochée (cf. fig. 2, 4) dans laquelle lesdites dentures sont emboîtées pour pouvoir les jonctionner. La position rapprochée est notamment définie par le bâti 23 lorsque la paire de mâchoires mobile 42 arrive en butée contre lui.

Dans l'exemple illustré, l'organe d'entraînement 43 comporte une vis de serrage 44 actionnée avec une clé ou une visseuse introduite dans la tête de vis 45 traversant un alésage lisse 46 de la paire de mâchoires mobile 42 et vissée dans un taraudage 47 du bâti 23. Bien entendu, tout autre moyen d'entraînement manuel ou automatique comme un vérin peut convenir. La paire de mâchoires mobile 42 est guidée en translation par deux colonnes de guidage 48 parallèles à l'axe longitudinal A, solidaires de la paire de mâchoires mobile 42 et coulissant dans des paliers 49 prévus dans le bâti 23. La configuration inverse est également possible à savoir des colonnes de guidage ou similaires, solidaires du bâti 23 sur lesquelles coulisse la paire de mâchoires mobile 42.

Chaque paire de mâchoires 41, 42 comporte une mâchoire supérieure 41a, 42a et une mâchoire inférieure 41b. 42b, articulées d'un côté et verrouillées de l'autre côté. Dans l'exemple illustré, la mâchoire supérieure 41a, 42a est articulée sur la mâchoire inférieure 41b, 42b au moyen d'une charnière 50 pour pouvoir passer d'une position ouverte dans laquelle le segment de bande 1 peut être introduit entre les deux mâchoires à une position fermée autour du segment de bande 1, cette position fermée étant verrouillée par un organe de fermeture 51. Les paires de mâchoires 41, 42 n'ont pas besoin d'exercer une pression sur le segment de bande 1. Ainsi, l'organe de fermeture 51 peut être constitué d'une attache rapide telle qu'un clip, pour éviter l'usage d'un outil.

Comme pour le logement de centrage 30, la section et les surfaces de réception des paires de mâchoires 41, 42 sont complémentaires de la section et des faces supérieure et inférieure du segment de bande 1. Notamment, dans l'exemple illustré, les surfaces de réception des mâchoires inférieures 41b, 42b sont crantées. Ainsi, cet outillage 10, 20 doit être adapté au segment de bande 1 à jonctionner.

Pour pouvoir réaliser la jonction, l'outillage 10, 20 comporte un magasin 60 communicant avec le logement de centrage 30 et pourvu d'alésages traversants 61 agencés pour recevoir les tiges de verrouillage 6, ces alésages d'axe B étant parallèles entre eux et perpendiculaires à l'axe longitudinal A du logement de centrage 30. Bien entendu, le pas des alésages traversants 61 est égal au pas des orifices traversants 7 ménagés dans les dentures complémentaires 4, 5. Le magasin 60 est donc adapté au segment de bande 1 à jonctionner et au type de jonction mécanique à réaliser. Les tiges de verrouillage 6 sont de préférence introduites dans le magasin 60 du côté du logement de centrage 30.

L'outillage 10, 20 comporte en complément dudit magasin 60 des moyens de poussée 11, 21 agencés pour déplacer en translation selon les axes B les tiges de verrouillage 6 en les introduisant dans les orifices traversants 7 de la jonction mécanique. Dans la variante simplifiée illustrée à la figure 1, les moyens de poussée sont constitués de vis de poussée 11, dont le nombre correspond au nombre de tiges de verrouillage 6, qui sont actionnées individuellement par l'opérateur muni d'une clé ou d'une visseuse. Bien qu'exécuté manuellement, ce travail est simplifié, sécurisé et nettement plus rapide que la solution actuelle sans outillage 10 puisque les vis de poussée 11 ont un diamètre supérieur à celui des tiges de verrouillage 6 et ont une tête pourvue d'une empreinte plus facile à visser et sans risque de glissement pour l'opérateur. De plus, les extrémités 2, 3 à jonctionner sont maintenues et les tiges de verrouillage 6 sont correctement positionnées et alignées sur les orifices traversants 7 d'axe B. Dans la variante perfectionnée illustrée à la figure 2, les moyens de poussée sont constitués de tiges de poussée 21 actionnées simultanément par un actionneur 22, tel qu'un vérin ou similaire. La tige 24 du vérin 22 est couplée à un répartiteur de charge 25 dans lequel sont logées les têtes 26 des tiges de poussée 21. Ce répartiteur de charge 25 est par ailleurs guidé en translation parallèlement aux axes B par des colonnes de guidage 27 pour garantir un déplacement linéaire et précis des tiges de poussée 21 donc des tiges de verrouillage 6 dans leurs axes B alignés avec les orifices traversants 7 prévus dans les dentures complémentaires 4, 5. Tout autre moyen de poussée équivalent peut bien entendu convenir.

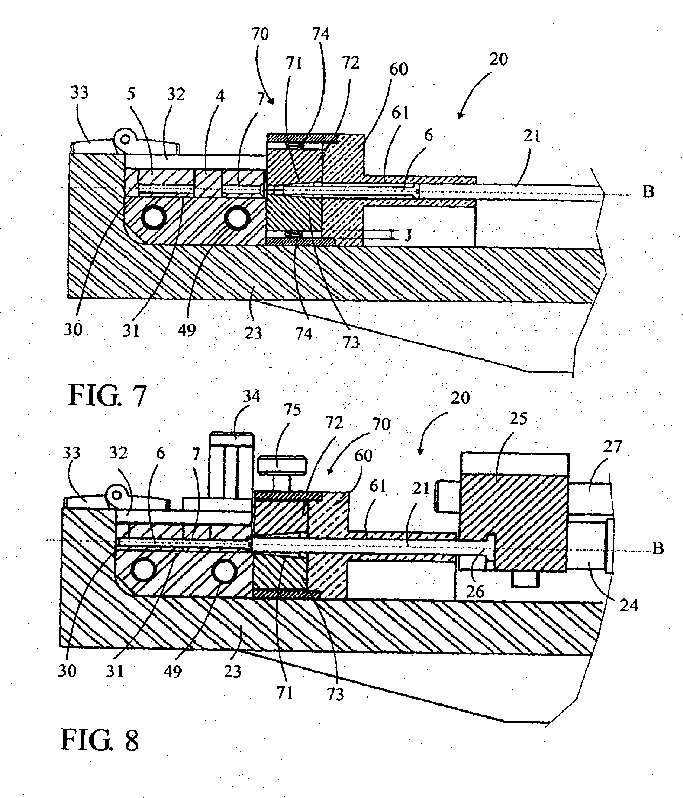

Pour améliorer encore l'alignement des tiges de verrouillage 6 sur les orifices traversants 7 des dentures complémentaires 4, 5, le magasin 60 comporte des moyens de centrage 70 disposés entre les moyens de poussée 21 et le logement de centrage 30. Ces moyens de centrage 70 comportent dans chaque alésage traversant 61 du magasin 60 un cône de centrage 71 coaxial à l'axe B dont le petit diamètre est orienté vers le logement de centrage 30 et a une dimension légèrement inférieure au diamètre d'une tige de verrouillage 6. Ces moyens de centrage 70 comportent deux demi-pièces 72, 73 pourvues chacune d'un demi-cône, une demi-pièce supérieure 72 superposée à une demi-pièce inférieure 73 pour délimiter entre elles les cônes de centrage 71. Les deux demi-pièces 72, 73 sont sollicitées l'une vers l'autre par un organe ressort 74 en appui contre les parois supérieure et inférieure dudit magasin 60 délimitant un jeu de débattement J. Un organe de vissage 75 accessible à l'opérateur permet d'ouvrir les cônes de centrage 71 pour libérer l'accès aux alésages traversants 61 du magasin 60 afin d'effectuer le chargement des tiges de verrouillage 6, puis de refermer ces cônes de centrage 71 pour bloquer les tiges de verrouillage 6 à l'intérieur du magasin 60. Il est ainsi possible de déplacer l'outillage 10, 20 chargé sans risque de perdre les tiges de verrouillage 6. Au cours de l'opération de jonctionnement, les tiges de verrouillage 6 sont centrées de manière forcée par les cônes de centrage 71 sollicités en position fermée par les organes ressort 74 (cf. fig. 7). Dès que la tête des tiges de verrouillage 6 suivie des tiges de poussée 21 entrent dans les moyens de centrage 70, les cônes de centrage 71 s'ouvrent sous la pression exercée par l'actionneur 22 écartant les demi-pièces 72, 73 du jeu de débattement J. L'organe ressort 74 comprimé maintient une pression sur les tiges de poussée 21 garantissant ainsi un déplacement dans l'alignement de l'axe B de chacune des tiges de verrouillage 6. Bien que les moyens de centrage 70 aient été décrits en référence à la variante perfectionnée de l'outillage 20 de la figure 2, ils sont tout à fait transposables à la variante simplifiée de l'outillage 10 de la figure 1.

### Possibilités d'application industrielle :

Il ressort clairement de cette description que l'invention permet d'atteindre les buts fixés, à savoir d'offrir à l'opérateur un outillage de jonctionnement adapté à son besoin et lui permettant de jonctionner mécaniquement les extrémités dentées d'un segment de bande sur une machine ou ligne de production de manière très rapide pour réduire au minimum le temps d'arrêt machine, soit environ 5mn au lieu de 20mn sans outillage, et donc les pertes de production, tout en garantissant une qualité et une précision de jonction inégalées à ce jour. De plus, cet outillage permet de remplacer des courroies fermées par des courroies à jonction mécanique sur tout type de machines ou lignes de production, même dépourvues de tendeur, ouvrant ainsi les possibilités d'application de cette technologie.

Cet outillage est conçu pour pouvoir être facilement adapté au segment de bande à jonctionner, au type de tiges de verrouillage à utiliser, au nombre de tiges de verrouillage à prévoir, etc. Il n'est pas limité à des segments de bande crantés mais convient pour des bandes plates. De même, les tiges de verrouillage utilisées pour la jonction mécanique peuvent être des vis, des tiges filetées, des tiges lisses, des clous ou toute autre tige. Comme déjà expliqué, l'outillage selon l'invention peut être proposé sans les moyens de mise en tension du segment de bande et/ou sans les moyens de centrage et/ou sans l'actionneur. Cet actionneur peut être du type pneumatique, hydraulique ou électrique. Il peut être remplacé par une vis de force, un moteur électrique ou similaire. Dans l'hypothèse où les moyens de centrage ne sont pas prévus dans l'outillage, des chanfreins peuvent être prévus à l'entrée des orifices traversants 7 ménagés dans les dentures complémentaires 4, 5 pour aider au centrage.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Outillage de jonctionnement (10, 20) des extrémités dentées (2, 3) d'un segment de bande (1) pour former une courroie en forme de boucle fermée au moyen d'une jonction mécanique, lesdites extrémités comportant des dentures (4, 5) complémentaires et ladite jonction comportant des tiges de verrouillage (6) introduites transversalement à travers des orifices traversants (7) ménagés dans les dentures (4, 5) complémentaires desdites extrémités du segment de bande (1), **caractérisé en ce que** ledit outillage comporte un bâti (13, 23) pourvu d'un logement de centrage (30), ouvert, traversant et rectiligne le long d'un axe longitudinal (A), agencé pour recevoir les extrémités (2, 3) du segment de bande (1) positionnées en regard l'une de l'autre, leurs dentures (4, 5) complémentaires étant emboîtées l'une dans l'autre, d'un magasin (60) communicant avec ledit logement de centrage (30) et pourvu d'alésages traversants (61) agencés pour recevoir lesdites tiges de verrouillage (6), lesdits alésages (61) étant parallèles entre eux et perpendiculaires à l'axe longitudinal (A) dudit logement de centrage (30), et de moyens de poussée (11, 21) agencés pour déplacer lesdites tiges de verrouillage (6) en les introduisant dans les orifices traversants (7) de ladite jonction mécanique.

2. Outillage de jonctionnement selon la revendication 1, **caractérisé en ce que** ledit logement de centrage (30) est fermé par une plaque de fermeture (32) agencée pour maintenir les extrémités (2, 3) emboîtées dudit segment de bande (1) pendant le jonctionnement.

3. Outillage de jonctionnement selon la revendication 1, **caractérisé en ce que** lesdits moyens de poussée comportent des vis de poussée (11), chaque vis de poussée (11) étant introduite dans un alésage traversant (61) dudit magasin (60) à l'opposé dudit logement de centrage (30) et agencée pour être vissée individuellement de manière à introduire chaque tige de verrouillage (6) individuellement dans un des orifices traversants (7) de ladite jonction mécanique.

4. Outillage de jonctionnement selon la revendication 1, **caractérisé en ce que** lesdits moyens de poussée comportent des tiges de poussée (21), chaque tige de poussée (21) étant introduite dans un alésage traversant (61) dudit magasin (60) à l'opposé dudit logement de centrage (30), et un actionneur (22) agencé pour déplacer lesdites tiges de poussée (21) simultanément de manière à introduire lesdites tiges de verrouillage (6) simultanément dans les orifices traversants (7) de ladite jonction mécanique.

5. Outillage de jonctionnement selon la revendication 4, **caractérisé en ce que** ledit actionneur est choisi parmi une vis de force vissée dans un taraudage dudit bâti et un vérin (22) porté par ledit bâti (23), l'extrémité de ladite vis de force ou la tige dudit vérin (24) étant couplée auxdites tiges de poussée par un répartiteur de charge (25).

6. Outillage de jonctionnement selon la revendication 1, **caractérisé en ce que** ledit magasin (60) comporte des moyens de centrage (70) disposés entre lesdits moyens de poussée (11, 21) et ledit logement de centrage (30), et agencés pour centrer lesdites tiges de verrouillage (6).

7. Outillage de jonctionnement selon la revendication 6, **caractérisé en ce que** lesdits moyens de centrage (70) comportent dans chaque alésage traversant (61) du magasin (60) un cône de centrage (71) coaxial.

8. Outillage de jonctionnement selon la revendication 7, **caractérisé en ce que** lesdits moyens de centrage (70) comportent deux demi-pièces (72, 73) pourvues chacune d'un demi-cône et superposées pour délimiter entre elles lesdits cônes de centrage (71), lesdites deux demi-pièces étant sollicitées l'une vers l'autre par un organe ressort (74).

9. Outillage de jonctionnement selon la revendication 1, **caractérisé en ce qu'**il comporte des moyens de mise en tension (40) desdites extrémités (2, 3) dudit segment de bande (1), portés par ledit bâti (13, 23).

10. Outillage de jonctionnement selon la revendication 9, **caractérisé en ce que** lesdits moyens de mise en tension (40) comportent deux paires de mâchoires (41, 42) disposées de part et d'autre dudit logement de centrage (30), alignées sur ledit axe longitudinal (A) et dans le plan dudit logement, chaque paire de mâchoires étant agencées pour maintenir ledit segment de bande (1) en amont desdites extrémités (2, 3) à jonctionner, et **en ce qu'**au moins une des paires de mâchoires (42) est mobile et couplée audit bâti (13, 23) par au moins un organe d'entraînement (43) agencé pour la déplacer en translation parallèlement audit axe longitudinal (A).

11. Outillage de jonctionnement selon la revendication 10, **caractérisé en ce que** ledit organe d'entraînement (43) comporte une vis de serrage (44) traversant un alésage lisse (46) de ladite paire de mâchoires (42) mobile et vissée dans un taraudage (47) dudit bâti (23).

12. Outillage de jonctionnement selon la revendication 10, **caractérisé en ce que** ledit organe d'entraînement (43) comporte un vérin dont une partie est solidaire du bâti et l'autre partie est solidaire de ladite paire de mâchoires mobile.

13. Outillage de jonctionnement selon l'une quelconque des revendications 10 à 12, **caractérisé en ce que** ladite paire de mâchoires (42) mobile est guidée en translation par au moins une colonne de guidage (48) parallèle audit axe longitudinal (A) et solidaire dudit bâti (23) ou de ladite paire de mâchoires (42) mobile.

14. Outillage de jonctionnement selon la revendication 10, **caractérisé en ce que** chaque paire de mâchoires (41, 42) comporte une mâchoire supérieure (41a, 42a) et une mâchoire inférieure (41b, 42b), articulées d'un côté et verrouillées de l'autre côté par un organe de fermeture (51).

15. Outillage de jonctionnement selon l'une quelconque des revendications 1 et 10, **caractérisé en ce que** les surfaces de réception dudit logement de centrage (30) et desdites paires de mâchoires (41, 42) sont complémentaires au segment de bande (1) à jonctionner.

## Patentansprüche

1. Werkzeug (10, 20) zum Verbinden der gezackten Endstücke (2, 3) eines Bandsegments (1) zum Herstellen eines Riemens in Form einer geschlossenen Schleife mit Hilfe einer mechanischen Verbindung, wobei die besagten Enden komplementäre Zacken (4, 5) betragen und die besagte Verbindung Verriegelungsstifte (6) beträgt, die quer durch in den komplementären Zacken (4, 5) der besagten Enden des Bandsegments (1) angeordnete durchgehende Öffnungen (7) eingeschoben werden, **dadurch gekennzeichnet, dass** das besagte Werkzeug ein Gestell (13, 23) beträgt, das mit einer Zentrier-Aufnahme (30) versehen ist, die offen, durchgehend und geradlinig entlang einer Längsachse (A) angeordnet ist, um die sich gegenüber positionierten Enden (2, 3) des Bandsegments (1) aufzunehmen, wobei ihre komplementären Zacken (4, 5) ineinander gefügt sind, sowie ein Magazin (60), das mit der besagten Zentrier-Aufnahme (30) in Verbindung steht und mit durchgehenden Bohrungen (61) versehen ist, die ausgelegt sind, um die besagten Verriegelungsstifte (6) aufzunehmen, wobei die besagten Bohrungen (61) untereinander parallel und senkrecht zur Längsachse (A) der besagten Zentrier-Aufnahme (30) sind, und Druckmittel (11, 21), die ausgelegt sind, um die besagten Verriegelungsstifte (6) zu bewegen und sie in die durchgehenden Öffnungen (7) der besagten mechanischen Verbindung einzuschieben.

2. Werkzeug zum Verbinden nach Anspruch 1, **dadurch gekennzeichnet, dass** die besagte Zentrier-Aufnahme (30) durch eine Verschluss-Platte (32) verschlossen ist, die ausgelegt ist, um die ineinandergefügten Enden (2, 3) des besagten Bandsegments (1) während des Verbindungsvorgangs fest zu halten.

3. Werkzeug zum Verbinden nach Anspruch 1, **dadurch gekennzeichnet, dass** die besagten Druckmittel Druckschrauben (11) betragen, wobei jede Druckschraube (11) in eine durchgehende Bohrung (61) des besagten Magazins (60), auf der der besagten Zentrier-Aufnahme (30) entgegen gesetzten Seite, eingeführt ist und ausgelegt ist, um individuell eingeschraubt zu werden, um jeden Verriegelungsstift (6) individuell in eine der durchgehenden Öffnungen (7) der besagten mechanischen Verbindung einzuschieben.

4. Werkzeug zum Verbinden nach Anspruch 1, **dadurch gekennzeichnet, dass** die besagten Druckmittel Druckstifte (21) betragen, wobei jeder Druckstift (21) in eine durchgehende Bohrung (61) des besagten Magazins (60), auf der der besagten Zentrier-Aufnahme (30) entgegen gesetzten Seite, eingeführt ist, sowie einen Antrieb (22), der ausgelegt ist, um die besagten Druckstifte (21) gleichzeitig zu bewegen, um die besagten Verriegelungsstifte (6) gleichzeitig in die durchgehenden Öffnungen (7) der besagten mechanischen Verbindung einzuschieben.

5. Werkzeug zum Verbinden nach Anspruch 4, **dadurch gekennzeichnet, dass** der besagte Antrieb zwischen einer in eine Gewindebohrung des besagten Gestells eingeschraubte Druckschraube und einem an dem besagten Gestell (23) befestigten Zylinder (22) gewählt wird, wobei das Ende der besagten Druckschraube oder die Stange des besagten Zylinders (24) über einen Lastverteiler (25) an die besagten Druckstifte gekoppelt ist.

6. Werkzeug zum Verbinden nach Anspruch 1, **dadurch gekennzeichnet, dass** das besagte Magazin (60) zwischen den besagten Druckmitteln (11, 21) und der besagten Zentrier-Aufnahme (30) angeordnete Zentriermittel (70) beträgt, die ausgelegt sind, um die besagten Verriegelungsstifte (6) zu zentrieren.

7. Werkzeug zum Verbinden nach Anspruch 6, **dadurch gekennzeichnet, dass** die besagten Zentriermittel (70) in jeder durchgehenden Bohrung (61) des Magazins (60) einen koaxialen Zentrierkonus (71) betragen.

8. Werkzeug zum Verbinden nach Anspruch 7, **dadurch gekennzeichnet, dass** die besagten Zentriermittel (70) zwei Halbteile (72. 73) betragen, die jeweils einen Halbkonus aufweisen und übereinander angeordnet sind, um zwischen sich die besagten Zentrierkonen (71) zu bilden, wobei die beiden Halbteile durch ein Federelement (74) gegeneinander gedrückt werden.

9. Werkzeug zum Verbinden nach Anspruch 1, **dadurch gekennzeichnet, dass** es auf dem besagten Gestell (13, 23) befestigte Spannmittel (40) für die besagten Enden (2, 3) des besagten Bandsegments (1) beträgt.

10. Werkzeug zum Verbinden nach Anspruch 9, **dadurch gekennzeichnet, dass** die besagten Spannmittel (40) zwei Paar auf beiden Seite der besagten Zentrier-Aufnahme (30), auf die besagte Längsachse (A) und in der Ebene der besagten Aufnahme ausgerichtete Spannbacken (41, 42) betragen, wobei jedes Paar Spannbacken ausgelegt ist, um das besagte Bandsegment (1) vor den besagten zu verbindenden Enden (2, 3) festzuhalten, und dadurch, dass zumindest eines der Paare Spannbacken (42) beweglich und über zumindest ein Antriebselement (43), das angeordnet ist, um es parallel zur besagten Längsachse (A) zu verschieben, an das besagte Gestell (13, 23) gekoppelt ist

11. Werkzeug zum Verbinden nach Anspruch 10, **dadurch gekennzeichnet, dass** das besagte Antriebselement (43) eine Spannschraube (44) beträgt, die durch eine glatte Bohrung (46) des besagten beweglichen Paares Spannbacken (42) dringt und in eine Gewindebohrung (47) des besagten Gestells (23) geschraubt ist.

12. Werkzeug zum Verbinden nach Anspruch 10, **dadurch gekennzeichnet, dass** das besagte Antriebselement (43) einen Zylinder beträgt, von dem ein Teil an dem Gestell befestigt ist und das andere Teil an dem besagten beweglichen Paar Spannbacken (42) befestigt ist.

13. Werkzeug zum Verbinden nach einem beliebigen der Ansprüche 10 bis 12, **dadurch gekennzeichnet, dass** das besagte bewegliche Paar Spannbacken (42) durch zumindest eine parallel zur besagten Längsachse (A) und an dem besagten Gestell (23) oder an dem besagten beweglichen Paar Spannbacken (42) befestigte Führungssäule (48) verschiebbar geführt ist.

14. Werkzeug zum Verbinden nach Anspruch 10, **dadurch gekennzeichnet, dass** jedes Paar Spannbacken (41, 42) eine obere Spannbacke (41a, 42a) und eine untere Spannbacke (41 b, 42b) beträgt, die auf einer Seite gelenkig verbunden sind und auf der anderen Seite durch ein Verschlusselement (51) verriegelt sind.

15. Werkzeug zum Verbinden nach einem beliebigen der Ansprüche 1 und 10, **dadurch gekennzeichnet, dass** die Aufnahmeflächen der besagten Zentrier-Aufnahme (30) und der besagten Paare Spannbacken (41, 42) komplementär zu dem zu verbindenden Bandsegment (1) sind.

## Claims

1. Tool (10, 20) for joining the toothed ends (2, 3) of a strip element (1) to form a closed-loop belt by means of a mechanical joint, said ends comprising complementary teeth (4, 5) and said junction comprising locking rods (6) introduced transversally in through openings (7) arranged in the complementary teeth (4, 5) of said ends of strip element (1), **characterized in that** said tool includes a frame (13, 23) provided with a centering seat (30) that is open, passing through and rectilinear along a longitudinal axis (A), arranged to receive the ends (2, 3) of the strip element (1) positioned in front of each other, their complementary teeth (4, 5) being fitted in each other, a magazine (60) that communicates with said centering seat (30) and is provided with through bores (61) arranged to receive said locking rods (6), said bores (61) being parallel with each other and perpendicular to the longitudinal axis (A) of said centering seat (30), and pushing means (11, 21) arranged to move said locking rods (6) to introduce them in the through openings (7) of said mechanical joint.

2. Tool for joining according to claim 1, **characterized in that** said centering seat (30) is closed with a closing plate (32) arranged to hold the fitted ends (2, 3) of said strip element (1) during joining.

3. Tool for joining according to claim 1, **characterized in that** said pushing means include pushing screws (11), each pushing screw (11) being introduced in a through bore (61) of said magazine (60) on the side opposed to said centering seat (30) and arranged to be screwed individually in order to introduce each locking rod (6) individually in one of the through openings (7) of said mechanical joint.

4. Tool for joining according to claim 1, **characterized in that** said pushing means include pushing rods (21), each pushing rod (21) being introduced in a through bore (61) of said magazine (60) on the side opposed to said centering seat (30), and an actuator (22) arranged to move said pushing rods (21) simultaneously in order to introduce said locking rods (6) simultaneously in the through openings (7) of said mechanical joint.

5. Tool for joining according to claim 4, **characterized in that** said actuator is chosen among a thrust screw screwed in a thread of said frame and a cylinder (22) mounted on said frame (23), the end of said thrust screw or the rod of said cylinder (24) being coupled to said pushing rods by a load balancer (25).

6. Tool for joining according to claim 1, **characterized in that** said magazine (60) includes centering means (70) located between said pushing means (11, 21) and said centering seat (30) and arranged for centering said locking rods (6).

7. Tool for joining according to claim 6, **characterized in that** said centering means (70) comprise, in every through bore (61) of the magazine (60), a coaxial centering cone (71).

8. Tool for joining according to claim 7, **characterized in that** said centering means (70) comprise two half parts (72, 73) provided each with a half cone and superposed to delimit said centering cones (71) between them, said two half parts being pushed against each other by a spring element (74).

9. Tool for joining according to claim 1, **characterized in that** it includes tensioning means (40) for said ends (2, 3) of said strip element (1), carried by said frame (13, 23).

10. Tool for joining according to claim 9, **characterized in that** said tensioning means (40) include two pairs of jaws (41, 42) arranged on both sides of said centering seat (30), aligned on said longitudinal axis (A) and in the plane of said seat, each pair of jaws being arranged to hold said strip element (1) upstream of said ends (2, 3) to be joined, and **in that** at least one of the pairs of jaws (42) is movable and coupled to said frame (13, 23) by at least one driving element (43) arranged to move it in translation parallel to said longitudinal axis (A).

11. Tool for joining according to claim 10, **characterized in that** said driving element (43) includes a tensioning screw (44) passing through a smooth bore (46) of said movable pair of jaws (42) and screwed in a thread (47) of said frame (23).

12. Tool for joining according to claim 10, **characterized in that** said driving element (43) includes a cylinder, one part of which is attached to the frame and the other part is attached to said movable pair of jaws.

13. Tool for joining according to any of claims 10 to 12, **characterized in that** said movable pair of jaws (42) is guided in translation by at least one guide column (48) parallel to said longitudinal axis (A) and attached to said frame (23) or to said movable pair of jaws (42).

14. Tool for joining according to claim 10, **characterized in that** each pair of jaws (41, 42) includes an upper jaw (41a, 42a) and a lower jaw (41b, 42b) articulated on one side and locked on the other side by a closing element (51).

15. Tool for joining according to any of claims 1 and 10, **characterized in that** the receiving surfaces of said centering seat (30) and of said pairs of jaws (41, 42) are complementary to the strip element (1) to be joined.
